# EUROPEAN PATENT APPLICATION

(11) **EP 2 552 098 A1**
(43) Date of publication of application: **30.01.2013**
(21) Application number: 11176021.1
(22) Date of filing: 29.07.2011
(51) Int. Cl.: H04N 5/00, H04N 7/16, G06Q 30/00, H04N 5/445

(54) **Method and device for processing a broadcast content stream**

(71) Applicant: Nagravision S.A., 1033 Cheseaux-sur-Lausanne (CH)
(72) Inventor: Piquet, Matthieu, 75009 Paris (FR)
(74) Representative: Leman Consulting S.A.

(57) **Abstract**

The present invention relates to a method for processing a broadcast content stream (3) aiming to substitute a section (S1, S2, S3) of this stream comprising at least one broadcast content (30) with at least an alternate content (30') to be displayed on a display device. Said substitution being controlled by a conditional access module (11) which processes said content (30) with incoming control messages (20, 21) and outputs the processed content to an output (12), said alternate content (30') being pre-stored in a content memory (19) of said user unit (10),
the method comprising the steps of:
a) receiving a broadcast content (30) and a control message (21) associated with said broadcast content (30);
b) checking if said control message (21) comprises a switching information (24) and, in positive event, checking if said switching information (24) has a positive characteristic, in positive event: switching the output (12) of the conditional access module (11) to the pre-stored alternate content (30').

## Description

### FIELD OF THE INVENTION

The present invention relates to the field of broadcast audio and video content such as advertisements for broadcast television programs received on a common interface module, mobile or set top box. More particularly, the invention refers to a method for processing a broadcast content stream aiming to substitute a section of this stream containing at least one broadcast content with at least an alternate content to be played on a playing device; the substitution being controlled by a conditional access module. The invention also refers to a device, i.e. a user unit, for performing the aforementioned method.

### BACKGROUND

Advertising plays an important role in the economics of entertainment programming in that advertisements are used to subsidize or pay for the development of the content. However, if the viewer does not feel concerned by the broadcasted advertisements, he will induce to skip the commercial breaks by zapping the displayed program for another channel.

In addition to this, it is well known that zapping time on mobile can be quite long. Should the subscriber change channel during the advertisement, the locally stored advertisements can be played while the receiver performs the necessary tasks (change tuner parameters, wait until the next burst...). This can be useful especially if subscribers are used to change channel during the advertisements, to prevent them to systematically skip the ads.

To avoid zapping as much as possible, it is known to handle target advertisement to the viewer, depending on its interests which can be defined in advance and saved into a user profile. With common free access television, it is almost impossible to suggest a particular content to each end user since viewers are anonymous and their access to the broadcast programs is not controlled. Therefore, targeted advertisement can be implemented only within a conditional access system which control access to digital television services to authorized users, i.e. identified users whose profile can be known in advance.

In order to substitute one sequence for another, one must first detect the video sequence subject to being replaced. Various systems able to manipulate video segments or video sequences in a television signal are already known from the prior art. The document EP1149491 discloses several known methods including detecting a change in the average light intensity of the video signal, detecting a rate of change in the luminance level between two different sets of frames, detecting increased cut rate and the presence of varying size text, detecting black level in the video signal which would indicate a break in the program where a commercial is inserted.

Another technique for identifying successive video sequences is to sense a drop in the voltage level on the input signal below a threshold, as suggested in the document US 4,314,285. Still another technique is disclosed in the US Patent 5,668,917 and consists to identify matching images.

These prior art techniques are not reliable given that discerning an advertisement on the basis of aforementioned means can be deficient, for instance in case there is a black frame in the middle of a movie. Besides, these devices and methods do not allow targeting the subject of the alternate sequence which has to replace the original content. Therefore, there is a need for commercial device and method to reliably substitute the broadcasted content for an alternate content depending on the profiles of subscribers.

### SUMMARY OF THE INVENTION

The first purpose of the present invention is to reliably manipulate broadcast content in view to extract at least one portion of an audio/video stream and to replace it with at least one alternate content to be displayed/played on a display or playing device; the substitution being controlled by a conditional access module. Another objective of this invention is to further handle the content according to its nature and to suggest alternate content to subscribers in accordance with their interests. Targeted content can be handled on the basis of several parameters pertaining to a subscriber profile. A further objective, is to proceed with such a handling without increasing the bandwidth, nor requiring any return path.

Although the nature of the contents expected in this invention is preferably advertisement, this invention is not limited to such a kind of content. Owing to the present invention, content aggregators will be able to better sell their advertisement areas.

To these aims, the present invention relates to a method for replacing a section of a broadcast content stream comprising at least one broadcast content with at least an alternate content to be displayed on a display device; the substitution being controlled by a conditional access module CAM. Such a module processes said broadcast content with incoming control messages and outputs the processed content to an output towards the playing device. The alternate content being pre-stored in a content memory of said user unit. The method comprising the steps of:
a) receiving a broadcast content and a control message associated to said broadcast content;
b) checking if said control message comprises a switching information and, in positive event, checking if said switching information has a positive characteristic, in positive event: switching the streaming of said broadcast content to the pre-stored alternate content.

Further, the method can comprise the steps of:
c) checking if at least one further control message comprises said switching information and, in positive event, checking if said switching information has a negative characteristic, in positive event: outputting the streaming broadcast content.

Positive and negative characteristics of the switching information can be defined for instance by a status respectively switched to ON or OFF.

Other optional steps will be disclosed in the following description of the invention.

The present invention also refers to a user unit for performing said method.

### BRIEF DESCRIPTION OF THE DRAWINGS

The present invention will be better understood thanks to the attached figures in which:
Figure 1 illustrates a diagram of processing a transport stream within a user unit, then outputting the content stream towards a playing device such as a display.
Figure 2 shows a schematic illustration of an entitlement control message ECM.
Figure 3 shows a simplified representation of a schematic transport stream.

### DETAILED DESCRIPTION

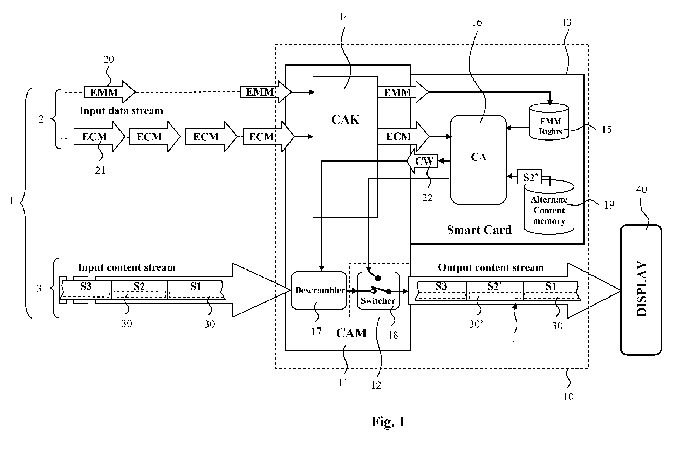

Referring to figure 1, the latter discloses a diagram for processing a transport stream 1 within a user unit 10 before playing the output content stream 4 on a playing device 40. The transport stream 1 refers to a collection of packets delivered over a physical transport channel to the user unit 10, such as a set-top-box for instance. This user unit comprises several components, among others a conditional access module 11 and a smart card 13 as shown in Fig. 1.

Schematically, the transport stream 1 comprises numerous data packets 20, 21, 30 of several kinds which are send in a continuous flow. These packets can be separated into two main types, namely an access conditions stream 2 and a content stream 3; both of these streams are input streams, which in reality are usually mixed together.

Within a digital pay television system or similar, the content stream comprises the events (i.e. a series of broadcast section s S1, S2, S3, etc with start and end dates/times) under the form of a stream of audio/video packets. This stream is generally encrypted in order to provide a restricted access. However, some events, such as advertisements or free broadcastings, are not necessarily scrambled.

On the other hand, the access conditions stream 2 comprises information packets which are able to manage the content stream 3. Among these information packets, we note the Entitlement Management Messages (EMM) 20 and control messages which typically are Entitlement Control Message (ECM) 21.

The EMM is a conditional access message sent by the Headend (e.g. the subscriber management system of the content provider) to the smart card 13 in order to set, reset or change products access entitlements. The ECM is another conditional access message containing the Access Conditions of the current broadcast event and the Control Word (CW) 22 used to unscramble the encrypted input stream.

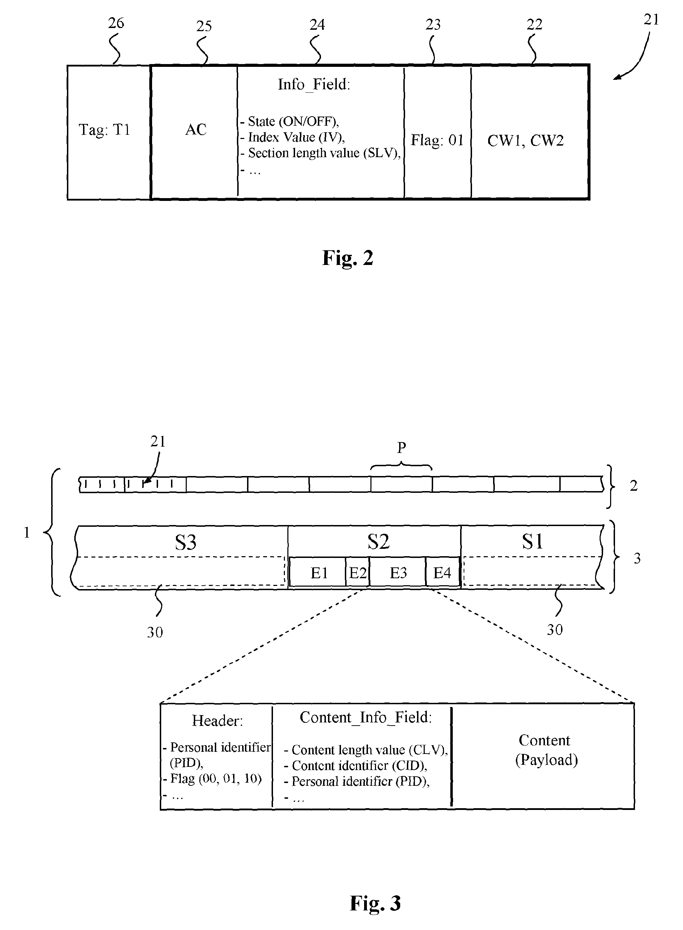

Briefly, the principle of the Conditional Access Module (CAM) 11 is to receive the entire encrypted transport stream 1 and to return the descrambled content within the output content stream 4. To this end, the CAM 11 comprises a Conditional Access Kernel (CAK) 14 which is a software running as an interface to the smart card 13 for processing the EMMs 20 and ECMs 21. Incoming EMMs 20 are processed by the CAK for storing the entitlements of the user into the EMM Rights data base 15. The first step of the process applied to incoming ECMs is to read a tag 26 (Fig. 2) attached to each ECM. Such a tag can be compared to an identification number which change regularly. Then, to compare their Access Conditions AC with the entitlements stored in the data base 15 of the smart card 13. In case of matching, it means that the user has the right profile and the smart card 13 extracts at least one CW 22 from the ECM 21 and sends it back to the CAK 14. This extraction is achieved by the Conditional Access unit (CA) 16 of the smart card 13. Then, the CAK 14 forwards this CW 22 to the descrambler 17 which will be able to decrypt the scrambled input content stream 3 for outputting a descrambled output content stream 4 which is finally displayable on the display device 40.

The portion of the content stream 3 shown in Fig. 1 comprises several successive sections S1, S2, S3 of at least one broadcast content stream 3, arranged one after the other. According to the preferred embodiment of the present invention, when a content 30 to be substituted is broadcast in the live stream, namely in the input content stream 3, it is signalized by a special field in the ECM 21. Depending on information contained in this special field, a switching unit 18 is activated to allow the substitution of at least one of these sections for another one containing at least an alternate content 30'. The Fig. 1 shows that the section S2 has been properly substituted for the section S2' without the end user realizes this substitution. To this purpose, at least one alternate content 30' has been previously stored in the user unit 10, in the present case in a content memory 19 of the smart card 13. According to the invention, the launching of pre-stored alternate contents is controlled by the ECM.

According to Fig. 1, the section's substitution is achieved by the switching unit 18 (switcher). However, this substitution could be achieved by another means, such as means for extracting the section (e.g. S2), then means for substituting it for an alternate section (S2'). Besides, the switching unit 18 must not be necessarily placed in the CAM 11 after the descrambler as shown in Fig. 1.

The Fig. 2 shows a schematic illustration of what are the main fields or elements comprised in an entitlement control message (ECM) 21. As already mentioned, the ECM 21 carried the control word CWs which are used by the descrambler unit to decrypt the scrambled input signal. The encryption of this signal changes periodically to prevent hacking. The time during which the same CW can be used defines a cryptoperiod P (see Fig. 3) which is typically a few seconds long, for instance 10 sec. In order to raise the efficiency of the system, each ECM carried two Control Words 21 which are identified by the acronyms CW1 and CW2 in Fig. 2. One of these CWs is used to decrypt the input signal during the current cryptoperiod, whereas the other CW will be used for the next cryptoperiod. To know which CW has to be used, the ECM includes a flag 23 of two bits. The value of this flag is either 00, 01 or 10 which respectively means that no CW are required (e.g. in case of free access), the first control word CW1 must be used, the second control word CW2 must be used for descrambling the input stream. On the other hand the broadcast content 30 also comprises a field containing such a flag to know which Control Word (CW1, CW2) has to be used to decrypt this content.

According to the invention, the ECM 21 further includes information data comprising at least switching information 24 which, in the preferred embodiment of the invention, corresponds to the special field used to announce the arrival or the presence of a content section to replace with an alternate content. This switching information can be represented as a data field in which useful information is included to perform the substitution of a section for another that provides an alternate content.

Each ECM comprises an Access Conditions field (AC) 25 containing the Access Conditions of the broadcast channels or events corresponding to the entitlement's profile of the user.

Each ECM also comprises a tag 26 which usually does not change during a same cryptoperiod P. Thus, all the ECMs belonging to a same cryptoperiod usually have the same tag. In known systems, once an ECM has been read, all the ECMs having the same tag are moved apart without being read given that the CWs are the same during a same cryptoperiod.

In order to process with the substitution of contents, the method of the present invention comprises the following steps:
a) receiving a broadcast content 30 and a control message 21 associated to said broadcast content 30;
b) checking if this control message 21 comprises a switching information 24 and, in positive event, checking if said switching information 24 has a positive characteristic, in positive event: switching the streaming of said broadcast content 30 to the pre-stored alternate content 30'.

The method further comprises the step of checking if at least one further control message 22 comprises said switching information 24 and, in positive event, checking if said switching information 24 has a negative characteristic, in positive event: outputting, to an output 12, the broadcast content stream 3 after descrambling if any. Compared to the previous step, this last step allows the conditional access system to return to its usual mode.

There are different manner to define the positive and negative characteristic of the switching information 24. The first manner is to assign to this switching information a state which can be changed between at least two statuses, namely ON or 1 for a positive status and OFF or 0 for a negative status. It should be noted that this information is not limited to a binary state.

In another manner, a counter can be used and the characteristic of the switching information 24 could be recognized as being positive if the counter reaches a first threshold value (e.g. zero) and negative if it reaches a second threshold value (e.g. either above or below zero).

This counter could be located in the system implemented by the present method so as to operate independently and could be loaded with an initializing value before its triggering. To this end, such a value may be an index value contained in the switching information 24.

Alternately, the index value carried by the switching information can be used as a current value of a virtual counter. This is made possible owing to the high rate of the ECM flow in the access conditions stream 2. By increasing/decreasing, in a constant manner and at regular interval, the index value within the switching information field of the next control messages (ECM), the reading of this index value will be the same as the reading of a real counter.

By this means, the switching information 24 can contain a time indicator which indicates to the CAM that the alternate content 30' will start in n seconds, or that this alternate content shall be immediately played or will stop in n seconds.

Further, the switching information 24 may comprise a section length value which defines the size of the section to substitute, or its duration depending on the type of unit on which the system is based. The index value and/or the section length value could refer to time values or to other kind of values such as pulses. In the same way, the content may comprise a content information field providing the content length value to define the size or duration of the content. As a variant, this information field could be comprised within the ECM in the cases of this content is identified with a personal identifier and this information field is associated to this personal identifier.

The figure 3 discloses a schematic representation of a simplified transport stream 1 which firstly shows that there is no synchronization between the cryptoperiods P or the flow of ECMs 21 and the sections S1, S2, S3. There is no more synchronization between the ECMs and the cryptoperiods P. Each section S1, S2, S3 may comprise one or several contents (i.e. events), represented in this figure by the boxes E1, E2, E3, E4. Another manner to announce the beginning of a new content 30 is to voluntarily change the tag 26 of the ECM 21 which is closest to this content (whatever its position within the cryptoperiod) in order to require, in particular, the processing of the switching information 24 of this ECM by the CAK 14. Still another manner to announce the arrival of a new content is to use the data code of the flag 23 of the ECM. For instance, a flag with a 00 or 11 value could be used to announce the coming of a new content such as advertising content, respectively non-advertising content.

As illustrated in Fig. 3 with reference to the event E3, each content has an architecture defining at least a header and a payload field. Typically, the header comprises at least the personal identifier of the payload and the flag indicating which Control Word (CW1 or CW2) has to be used to decrypt the present content. The payload field comprises at least a portion of the content, e.g. the event to be broadcast. Such a content E3 may further comprise an information field containing information about the event.

According to a preferred embodiment, each of these contents (i.e. the broadcast content 30 of the input stream 3 and the alternate content 30' of the alternate content memory 19) is associated with a content identifier which allows at least a classification of these contents according to their nature (i.e. the type or kind of the content). By this means, it becomes possible to sort these contents in view to target the events to be played and/or contents that must be pre-stored in the alternate content memory 19. Although the alternate contents 30' could be stored sequentially in a carousel within the content memory, it is more efficient to sort the contents during the input in the content memory, rather than during the output. Thus, an alternate section (e.g. the section S2' of Fig. 1) comprising specific contents 30' will be created to substitute the corresponding regular section (i.e. the section S2 of Fig. 1) of the input content stream 3. The alternate contents can be defined as being specific, or targeted, whether it matches with the interests of the viewer. The content identifier could be included either in the content information field or within the switching information 24 of the control message 21.

To avoid that a same alternate content is displayed several times within a too short time interval or to avoid storing of a content which already exists in the content memory 19, each content 30, 30' will be preferably identified with a unique personal identifier, located for example in its header. By this means, each content can be selected not only on the basis of its nature but also according to its personal identifier.

The selection of targeted contents can be made in accordance with a user profile recording at least one preferred nature and/or at least one preferred content personal identifier. Such a profile can be stored for instance in the memory of the user unit and updated, for instance by using at least one EMM if required.

The pre-storing of alternate contents can be made either in live, from the broadcast content stream, or in a hidden stream, from at least a portion (packet) of the broadcast content stream 3 which is not outputted to the display device 40.

The implementation of the section to be replaced by the alternate contents can be made according to several manners, depending on whether the contents are the same length or not. In case all the contents 30, 30' are the same length, the substituting of one or more contents 30 by alternate contents 30' does not cause particular problems. However, if the content lengths values are unequal, then it is suitable to combine alternate contents of different lengths which can be arranged within the length of the section.

On the basis of available alternate contents 30' stored in the content memory 19, a process could be dedicated to search at least one combination whose the sum of the content length values of the alternate contents 30' is either equal to the length of the section S1, S2, S3 to substitute or introduces a difference with respect to this length. Preferably, any difference will be the smallest possible. To avoid any black frame in the alternate section to be displayed, such a difference will be compensated by adding an alternate content having a still picture, in cases of the length of the section to substitute is longer than the aforementioned sum. In the event this length is slightly longer, the difference could be compensated by extending at least one of the alternate content. Such an extension could be obtained for instance by lengthening the duration of each video image of the content and by synchronizing the sound in the same way.

On the contrary, if the length of the section S1, S2, S3 to substitute is slightly shorter than this sum, the difference could be compensated by compressing at least one of the alternate content. Such a compression could be obtained for instance by reducing the video frame rate and by slightly increasing the speed of the sound, so as to keep the synchronism between the image and the sound.

The index value of the switching information 24 could be also an ECM identifier, for instance a packet identifier pertaining to the ECM 21. Besides, the section length value may be included in this ECM identifier.

In the same way, the content length value and/or the personal identifier associated to each content may be included into the content identifier which allows a classification according to the nature.

In another embodiment, the switching information 24 comprises, or further comprises, a list of content identifiers to be displayed/played.

According to a preferred embodiment, part of the aforementioned contents is advertising, as well as the alternate content 30' pre-stored in the content memory 19. Moreover, it should be noted that advertisement content can be either free access content or scrambled content.

In cases of the content memory 19 contains advertising, it would suitable to lock the access to this memory in order to prevent any reload with contents chosen by the user.

Advantageously, by using a common interface hosting the conditional access module, the latter becomes independent from any device and the system can therefore easily be implemented in many different devices.

If the common interface or the CAM has some messaging functionalities, some interactivity can be launched to the paying device relative to the current played/displayed content. For example, if it can trigger an HTML banner or a link, that banner or link can be displayed with the content to allow interactive actions.

The present invention also refers to a user unit 10 for performing the above-mentioned method, namely a device for processing a broadcast content stream 3 aiming to substitute a section S1, S2, S3 of this stream containing at least one broadcast content 30 with at least an alternate content 30' to be played/displayed, for instance on a display unit 40. To this end, the user unit 10 comprises:
- a conditional access module 11 for processing said broadcast content stream 3 with incoming control messages 21 associated to said broadcast content 30 and for outputting the processed content to an output 12,
- a content memory 19 to pre-store said alternate content 30',
said conditional access module 11 comprising receiving means for receiving at least a broadcast content 30 together with at least a control message 20, 21, checking means for checking if said control message 21 comprises a switching information 24 and for checking if said switching information 24 has a positive characteristic, and a switching unit 18 for switching the output 12 of the conditional access module 11 to the pre-stored alternate content 30' and conversely.

The user unit 10 can further comprises a counter whose value is used for defining whether the switching information 24 is recognized as being positive or negative depending on at least one predefined threshold value.

Further, the user unit 10 may comprise a timer which is able to read a time indicator contained within the switching information 24. Owing to this time indicator, this timer is then able to indicate when the switching unit 18, which outputs the alternate content 30', should start and/or stop.

Further, the user unit 10 may comprise a sizing means which is able to read a section length value contained within the switching information 24 for determining the size or the duration of the section which has to be substituted.

Further, the user unit 10 may comprise processing means for determining, according to the section length value and/or to the content length values of the contents 30, 30', at least one alternate content 30' which has to replace the broadcast content 30.

## Claims

1. Method for processing a broadcast content stream (3) aiming to substitute a section (S1, S2, S3) of this stream containing at least one broadcast content (30) with at least an alternate content (30') to be displayed on a display device, said substitution being controlled by a conditional access module (11) which processes said content (30) with incoming control messages (20, 21) and outputs the processed content to an output (12), said alternate content (30') being pre-stored in a content memory (19) of said user unit (10),
the method comprising the steps of:
a) receiving a broadcast content (30) and a control message (21) associated to said broadcast content (30);
b) checking if said control message (21) comprises a switching information (24) and, in positive event, checking if said switching information (24) has a positive characteristic, in positive event: switching the output (12) of the conditional access module (11) to the pre-stored alternate content (30').

2. Method of claim 1, further comprising the steps of:
c) checking if at least one further control message (21) comprises said switching information (24) and, in positive event, checking if said switching information (24) has a negative characteristic, in positive event: switching the output (12) of the conditional access module (11) to the broadcast content stream (3).

3. Method of claim 1, wherein said positive characteristic is defined by a status switched to ON.

4. Method of claim 2, wherein said negative characteristic is defined by a status switched to OFF.

5. Method of claim 1 or 2, wherein said switching information (24) comprises an index value to be loaded in a counter as an initializing value.

6. Method of claim 1 or 2, wherein said switching information (24) comprises an index value which corresponds to the current value of a counter.

7. Method of claims 5 or 6, wherein said switching information (24) is recognized as positive characteristic if said counter reaches a first threshold value.

8. Method of claims 5 or 6, wherein said switching information (24) is recognized as negative characteristic if said counter reaches a second threshold value.

9. Method of any of claims 1 to 6, wherein said switching information (24) further comprises a section length value which defines the length of the section to substitute.

10. Method of claim 1, wherein each content further comprises a content length value defining the length of said content.

11. Method of claim 5 or 6, wherein said index value refers to a time value.

12. Method of claim 9 or 10, wherein said length values refer to time values.

13. Method of any of preceding claims, wherein each of these contents is associated with a content identifier which at least allows a classification of these contents according to their nature.

14. Method of any of preceding claims, wherein a unique personal identifier is associated to each of these contents.

15. User unit (10) for performing the method of any of preceding claims by processing a broadcast content stream (3) aiming to substitute a section (S1, S2, S3) of this stream containing at least one broadcast content (30) with at least an alternate content (30') to be displayed, comprising:
- a conditional access module (11) for processing said broadcast content stream (3) with incoming control messages (21) associated to said broadcast content (30) and for outputting the processed content to an output (12),
- a content memory (19) to pre-store said alternate content (30'),
said conditional access module (11) comprising receiving means for receiving at least a broadcast content (30) together with at least a control message (20, 21), checking means for checking if said control message (21) comprises a switching information (24) and for checking if said switching information (24) has a positive characteristic, and a switching unit (18) for switching the output (12) of the conditional access module (11) to the pre-stored alternate content (30') and conversely.
